# EUROPÄISCHE PATENTSCHRIFT

(11) **EP 3 260 231 B1**
(45) Veröffentlichungstag und Bekanntmachung des Hinweises auf die Patenterteilung: **29.08.2018**
(21) Anmeldenummer: 16175331.4
(22) Anmeldetag: 20.06.2016
(51) Int. Cl.: B23K 37/04, B21F 15/08, B25J 15/02, B25J 15/00, B23K 101/32

(54) **GREIFER UND VERFAHREN ZUM GREIFEN VON ENDEN VON DRÄHTEN UND DRAHTSCHWEISSMASCHINE UND ROBOTER MIT DERARTIGEN GREIFERN**
GRIPPER AND METHOD FOR GRIPPING ENDS OF WIRES AND WIRE WELDING MACHINE AND ROBOT WITH SUCH GRIPPERS
PINCE ET MÉTHODE DESTINES À SAISIR DES EXTREMITES DE FILS ET MACHINE ET ROBOT DE SOUDAGE DE FIL COMPRENANT DE TELLES PINCES.

(43) Veröffentlichungstag der Anmeldung: 27.12.2017
(73) Patentinhaber: Ideal-Werk C. & E. Jungeblodt GmbH & Co.KG, 59557 Lippstadt (DE)
(72) Erfinder: JUNGEBLODT, Max Clemens, 59555 Lippstadt (DE)
(74) Vertreter: Manske, Jörg

(56) Entgegenhaltungen:
- CN-U- 204 800 628
- DE-T1- 19 681 534

## Beschreibung

Die vorliegende Erfindung betrifft einen Greifer zum Greifen von Enden von Drähten und ein Verfahren zum Greifen eines Drahtes und Positionieren des Endes des Drahtes mit einem Greifer gemäß dem Oberbegriff der Ansprüche 1 und 19 (siehe, z.B. DE 196 81 534 T1). Aus dem Stand der Technik ist Bewehrungs- oder Betonstahl bekannt, der als Bewehrung (Verstärkung) von Stahlbetonbauteilen verwendet wird und nach dem Einbau in eine Schalung mit Beton vergossen wird. Übliche Durchmesser solcher Bewehrungs- oder Betonstahldrähte sind 6, 8, 10, 12, 14, 16, 20, 25, 28, 32 und 40 mm. Bewehrungs- oder Betonstahl wird in Walzwerken hergestellt und aufgehaspelt. Die aufgehaspelten Drähte werden dann weiter verarbeitet, zum Beispiel um Betonstabstahl, Betonstahlmatten, Bewehrungsdraht oder ähnliches herzustellen.
Um das aufgehaspelte Material optimal nutzen zu können und die das Material verarbeitenden Maschinen möglichst kontinuierlich nutzen zu können, ist es von Vorteil, wenn vor der Weiterverarbeitung das Ende eines ersten zu verarbeitenden aufgehaspelten Stahls mit dem Ende eines zweiten zu verarbeitenden, aufgehaspelten Stahl verbunden wird, so dass der Stahl kontinuierlich verarbeitet werden kann.
Zum Schweißen der Enden werden diese derzeit von Hand in einer Drahtschweißmaschine in gewünschten Schweißpositionen positioniert. Dazu ist ein erheblicher Kraftaufwand notwendig, der umso größer ist, je größer der Durchmesser der zu schweißenden Drähte ist.
Das Verbinden von Enden von Drähten durch Schweißen ist aber nicht auf das Schweißen von Bewehrungs- oder Betonstahldrähten beschränkt. Auch andere Drähte können in gleicher Weise durch Schweißen miteinander verbunden werden.

Das Dokument CN 204800628 U offenbart einen Greifer für einen Robotor oder einen Manipulator (Handhabungseinrichtung) mit den Merkmalen des Anspruchs 1, der zum Greifen von Stahlstäben verwendet werden kann. Es ist nicht bekannt, dass der in dem Dokument CN 204800628 U offenbarte Greifer bei einer Drahtschweißmaschine eingesetzt worden ist und ob der Greifer geeignet ist, Drähte zu ergreifen und die Enden der Drähte gegen deren Steifigkeit einer Drahtschweißmaschine zuzuführen.

Um den Maschinenbedienern einer Drahtschweißmaschine das Positionieren der Enden der Drähte zu erleichtern schlägt die Erfindung daher den besonderen Greifer zum Greifen von Enden von Drähten nach Anspruch 1 und eine Drahtschweißmaschine mit einem solchen Greifer vor.

Ein erfindungsgemäßer Greifer weist demnach ein Fangmittel auf, welches aus einer ersten Position in eine zweite Position bewegbar ist, wobei das Fangmittel in der zweiten Position den Bereich benachbart zu der ersten Spannbacke zumindest einseitig begrenzt.

Durch das Fangmittel ist es möglich den Greifer zunächst grob gegenüber dem Ende eines zu ergreifenden Drahtes zu positionieren. Der Greifer kann nach dem Fangen des Drahtes mittels des Fangmittels gegenüber dem Ende des Drahtes exakt positioniert werden, wozu der Greifer gegenüber dem Draht bewegt wird und wobei durch den Greifer auch eine Kraft auf den Greifer ausgeübt werden kann, ohne dass der Draht aus der Fangposition herausrutscht.

Gemäß der Erfindung kann das Fangmittel mittels einer Feder aus seiner ersten in seine zweite Position bewegt werden. Die Feder kann eine metallische Feder, eine Feder aus Gummi oder einem anderen Elastomer, eine Luftfeder oder eine Gasdruckfeder sein. Wird eine metallische Feder verwendet, kann diese insbesondere eine Schraubendruckfeder sein.

Ebenso ist es möglich, dass das Fangmittel mittels eines Motors aus seiner ersten in eine zweite Position bewegt wird.

Das Fangmittel kann linear aus seiner ersten Position in seine zweite Position verschiebbar sein. Möglich ist auch, dass das Fangmittel eine Schwenkbewegung aus seiner ersten in seine zweite Position vollziehen kann. Auch komplexere Bewegungen sind möglich, die zum Beispiel durch eine Kulisse vorgegeben wird.

Ein erfindungsgemäßer Greifer kann einen Auslöser aufweisen. Dieser Auslöser kann mit dem Fangmittel und/oder der Feder gekoppelt sein, um die Bewegung des Fangmittels aus seiner ersten Position in seine zweite Position auszulösen. Der Auslöser kann zum Beispiel die Feder blockieren und zum Auslösen der Bewegung des Fangmittels in seine zweite Position freigeben. Möglich ist es aber auch, dass das Fangmittel durch die Feder belastet und vom Auslöser blockiert ist. Durch das Auslösen wird die Blockade des Fangmittels aufgehoben, so dass das Fangmittel in seine zweite Position bewegt wird.

Der Auslöser eines erfindungsgemäßen Greifers kann in einem nicht ausgelösten Zustand in den Bereich benachbart zu der ersten Spannbacke hineinragen und in einem ausgelösten Zustand außerhalb des Bereichs benachbart zu der ersten Spannbacke sein. Wird der Draht in den Greifer gebracht oder umgekehrt der Greifer an den Draht herangeführt, kann der Draht gegen den in dem Bereich benachbart zu der ersten Spannbacke befindlichen Auslöser stoßen. Dadurch kann der Auslöser ausgelöst werden. Das Fangmittel kann dann in seine zweite Position bewegt werden. Dadurch ist dann der Bereich benachbart zu der ersten Spannbacke begrenzt. Die Begrenzung des Bereiches erfolgt vorzugsweise auf der Seite des Bereiches, über die der Draht in den Greifer hineinbewegt wurde bzw. der Greifer an den Draht herangeführt wurde. Durch das Fangmittel ist der Draht in dem Greifer zwar noch nicht festgelegt, aber doch schon grob positioniert. Zugleich ist verhindert, dass der Draht bei Korrekturbewegungen zwischen dem Draht und dem Greifer, die zur exakten Positionierung und Ausrichtung des Drahtes in dem Greifer notwendig sein können, aus dem Greifer herausrutscht.

Gemäß der Erfindung kann die zweite Spannbacke aus der zweiten Position in eine dritte Position bewegbar sein.

Mittels der zweiten Spannbacke und/oder einem mit der zweiten Spannbacke verbundenem Gegenstand kann dabei das Fangmittel aus der zweiten Position in die erste Position bewegbar sein. Die Bewegung des Fangmittels in seine erste Position kann an die Bewegung der zweiten Spannbacke in ihre dritte Position gekoppelt sein.

Das Fangmittel kann in der ersten Position durch eine Falle oder einen Haken des Auslösers gehalten werden.

Die zweite Spannbacke kann schwenkbar an einem Lagerteil gelagert sein. Das Lagerteil kann linear verschiebbar am und/oder zum Verbindungsmittel gelagert sein. Der Greifer kann eine mit dem Verbindungmittel fest verbundene Kulisse und einen mit dem der zweiten Spannbacke verbundenen Kulissenstein aufweisen, wobei der Kulissenstein in der Kulisse bewegbar angeordnet ist. Der Kulissenstein kann an der zweiten Spannbacke befestigt sein. Durch eine Verschiebung des Lagerteils relativ zur Kulisse werden dann der Kulissenstein und die damit verbundene zweite Spannbacke bewegt. Die Bahn, entlang der sich die zweite Spannbacke bewegt, wird dabei von der Kulisse vorgegeben.

Die Kulisse kann einen Schlitz mit einem ersten gebogenen Bereich und einem zweiten, an den ersten Bereich anschließenden geraden Bereich aufweisen.

Gemäß der Erfindung kann die zweite Spannbacke in der ersten Position sein, wenn der Kulissenstein in einer ersten Position am vom zweiten Bereich abgewandten Ende des ersten Bereichs des Schlitzes der Kulisse ist. Die zweite Spannbacke kann in der zweiten Position sein, wenn sich der Kulissenstein in einer zweiten Position an einem Ort des Schlitzes der Kulisse am Übergang vom ersten zum zweiten Bereich oder benachbart zur diesem Ort befindet. Die zweite Spannbacke kann in der dritten Position sein, wenn der Kulissenstein in einer dritten Position am vom ersten Bereich abgewandten Ende des zweiten Bereichs des Schlitzes der Kulisse ist.

Ein erfindungsgemäßer Greifer kann ein Anschlagmittel aufweisen, der zwischen einer ersten Position und einer zweiten Position beweglich ist. Mit diesem Anschlagmittel, kann es möglich sein, den Draht in dem Greifer exakt zu positionieren. Dabei kann das Anschlagmittel in der ersten Position einen Anschlag für das Ende eines vom Greifer aufgenommenen Drahtes sein, während in der zweiten Position des Anschlagmittels das Ende des Drahtes frei von dem Anschlagmittel ist, so dass das Ende des Drahtes bewegt werden kann.

Ein Greifer gemäß der Erfindung kann eine Haube aufweisen, in welcher die zweite Spannbacke in ihrer ersten Position untergebracht ist. Mit der Haube ist es möglich die zweite Spannbacke in ihrer ersten Position gegen Beschädigungen, zum Beispiel aufgrund von Zusammenstößen des Greifers mit einem Draht, einer Haspel oder anderem, zu schützen.

Eine erfindungsgemäße Drahtschweißmaschine kann wenigstens einen Roboter oder ein Handhabungsgerät zum Zuführen von Enden zu verschweißender Drähte aufweisen, wobei der Roboter oder das Handhabungsgerät wenigstens einen erfindungsgemäßen Greifer zum Greifen von Enden des Drahtes aufweist.

Weitere Merkmale und Vorteile der vorliegenden Erfindung werden deutlich anhand der nachfolgenden Beschreibung eines bevorzugten Ausführungsbeispiels unter Bezugnahme auf die beiliegenden Abbildungen. Darin zeigt:
- Fig. 1: in einer schematischen, perspektivischen Darstellung eine Drahtschweißmaschine mit zwei Greifern zum Greifen von Enden von Drähten,
- Fig. 2 bis Fig. 9: einen der Greifer oder wesentliche Teile eines der Greifer in verschiedenen Zuständen und aus verschiedenen Perspektiven.

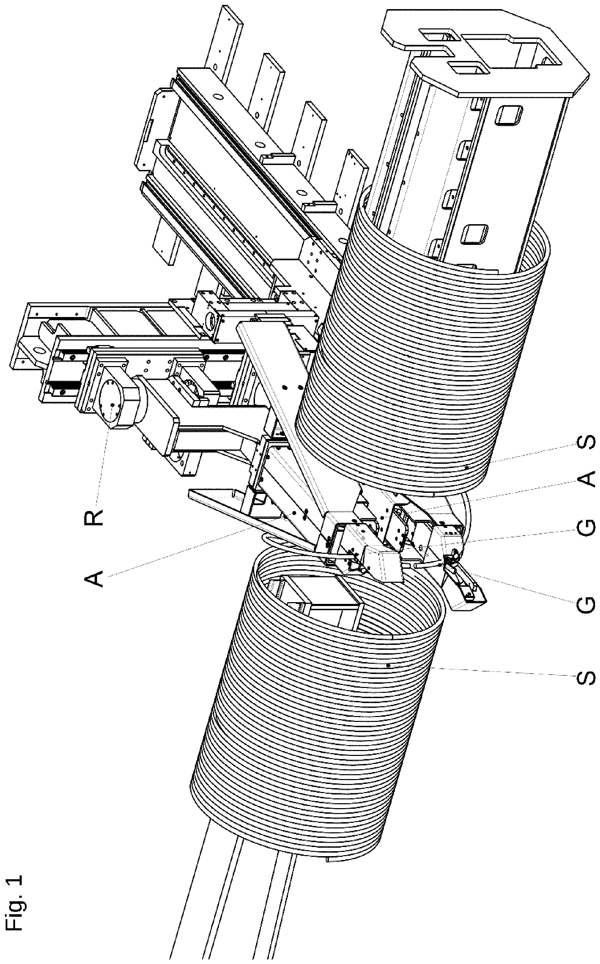

Mit der in der Fig. 1 dargestellten Drahtschweißmaschine S können die Enden D1 von Drähten D, insbesondere Bewehrungs- oder Betonstahldrähte mit einem Durchmesser von 6 bis 40 mm, durch Schweißung mit einander verbunden werden.

Dazu werden die Enden D1 der Drähte D zueinander ausgerichtet und aneinander gelegt, so dass sich nach einem Fügen der Enden durch Schweißung ein knickfreier Übergang von einem Draht D zum anderen Draht D an der Fügestelle ergibt.

Das Positionieren der Drähte D vor der Schweißung wird - um einen Maschinenbediener zu entlasten - mit Hilfe der Greifer G vorgenommen. Diese Greifer G greifen die Drähte D nahe ihren Enden, so dass die Enden zum Schweißen in eine bekannte Position gebracht werden können und in einer gewünschten Richtung ausgerichtet werden können.

Eine Schwierigkeit besteht darin, dass die Enden der Drähte D vor dem Fügen keine vorbestimmte Position haben. Die Drähte D werden im Beispiel auf einer Haspel zur Schweißmaschine geliefert. Die Enden der aufgehaspelten Drähte stehen liegen dabei erfahrungsgemäß dicht an dem übrigen, aufgehaspelten Draht an. Die Enden müssen zunächst, bevor sie mit einem Greifer G ergriffen werden können, manuell von einem Maschinenbediener und ggf. mit Hilfe von Werkzeug aus dem aufgehaspelten Draht herausgbogen werden. Nach dem herausbiegen steht das Ende des Drahtes von der Haspel in eine willkürliche Richtung ab.

Eine Schwierigkeit besteht darin, die Enden der aufgehaspelten Drähte D mit dem Greifer G so zu ergreifen, dass die Enden in einer bestimmten Position zum Greifer G fixiert sind. Erst dann können sie mittel des Greifers G in eine definierte Position, zum Beispiel der Schweißposition überführt werden.

Die Greifer G sind zum Beispiel an Schwenkarmen A von Robotern R oder Handhabungseinrichtungen angebracht, die es möglich machen die Greifer G in verschiedene Richtungen im Raum zu bewegen und in verschiedene Richtungen im Raum auszurichten. Die Bewegung der Greifer bzw. der Schwenkarme oder von Gliedern der Schwenkarme kann manuell, motorisch oder manuell mit Servounterstützung erfolgen.

Manuell oder motorisch oder manuell mit Servorunterstützung kann der Greifer G an das Ende eines ersten zu ergreifenden Drahtes herangeführt werden. Ist eine gewünschte Position und Ausrichtung des Drahte und des Greifers zueinander erreicht, ergreift der Greifer G den Draht D, so dass er anschließend vorzugsweise motorisch oder manuell mit Servounterstützung in die Position gebracht werden kann, in der die Schweißung erfolgen kann. Genau so kann ein zweiter zu ergreifender Draht D mit einem zweiten Greifer G ergriffen und das Ende dieses zweiten Drahtes D in eine Schweißposition gebracht werden.

Haben beide Enden die gewünschte Schweißposition erreicht, kann die Schweißung beginnen.

Die Greifer G machen es somit möglich die Enden der zu schweißenden Drähte in die gewünschte Schweißposition zu bringen. Das soll, zur Entlastung des Maschinenbedieners mit möglichst wenig Kraftaufwand erfolgen, anders als es bisher üblich ist, denn bisher werden die Enden der Drähte mit zum Teil erheblichem Kraftaufwand manuell positioniert.

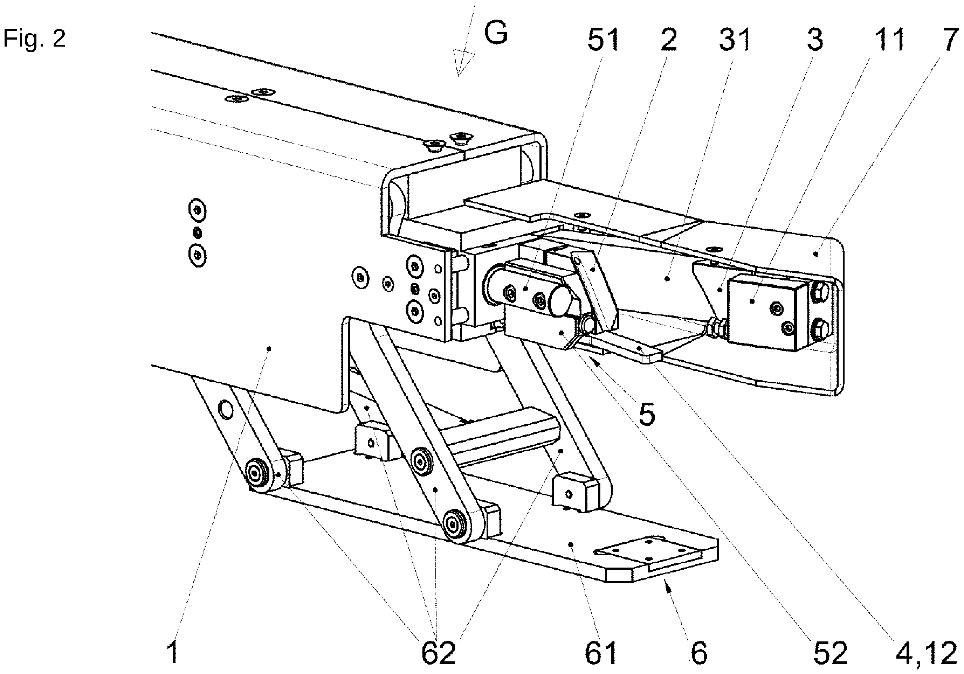

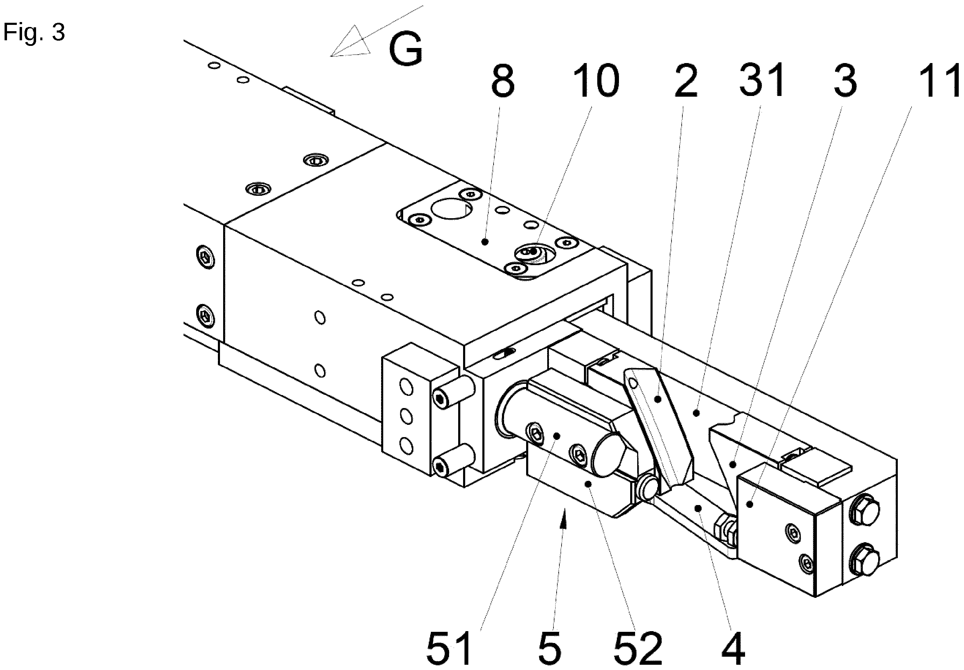

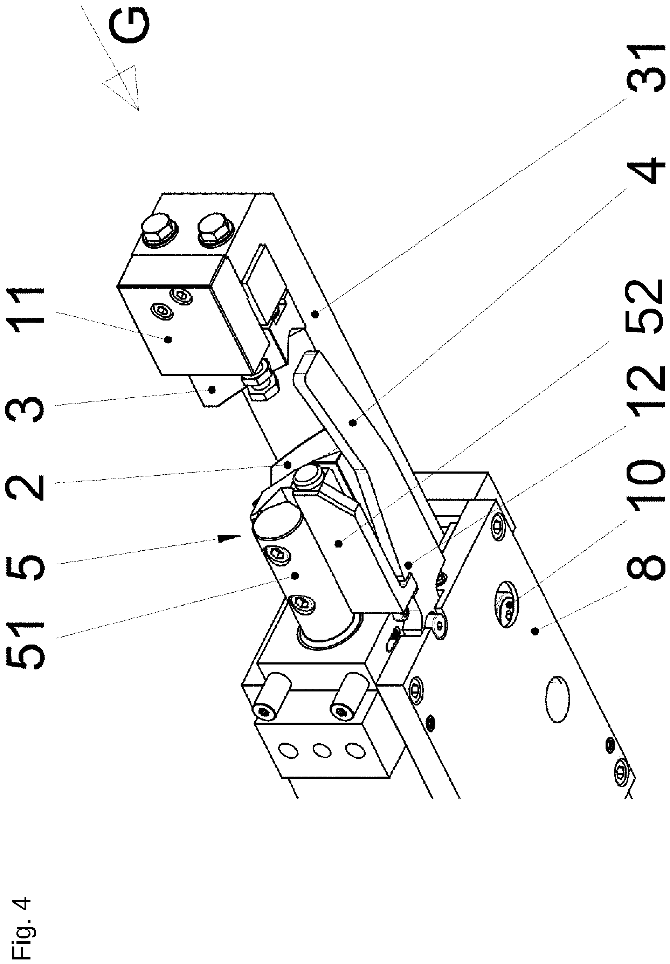

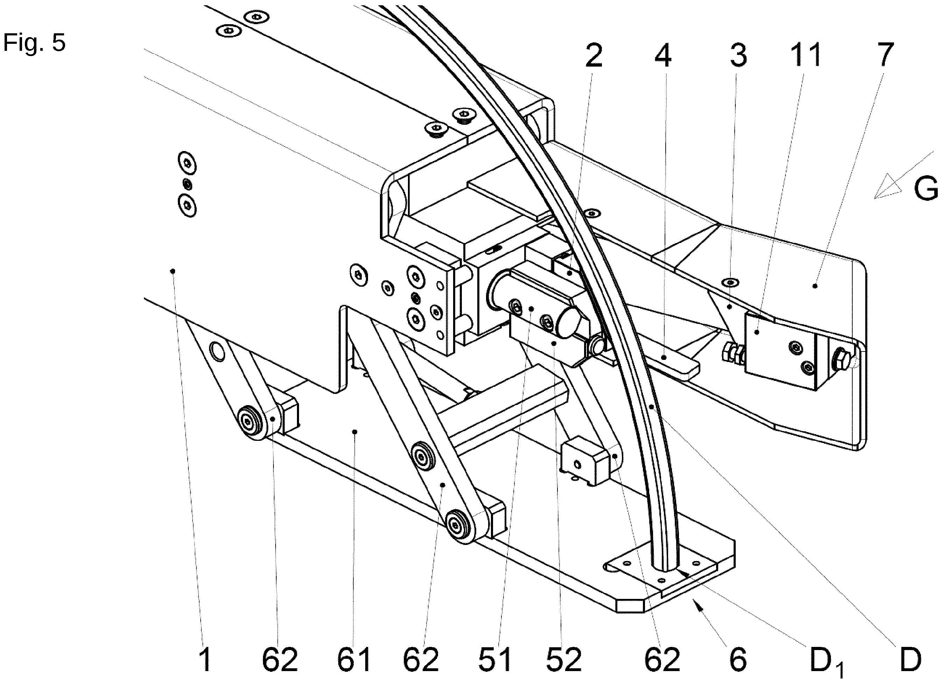

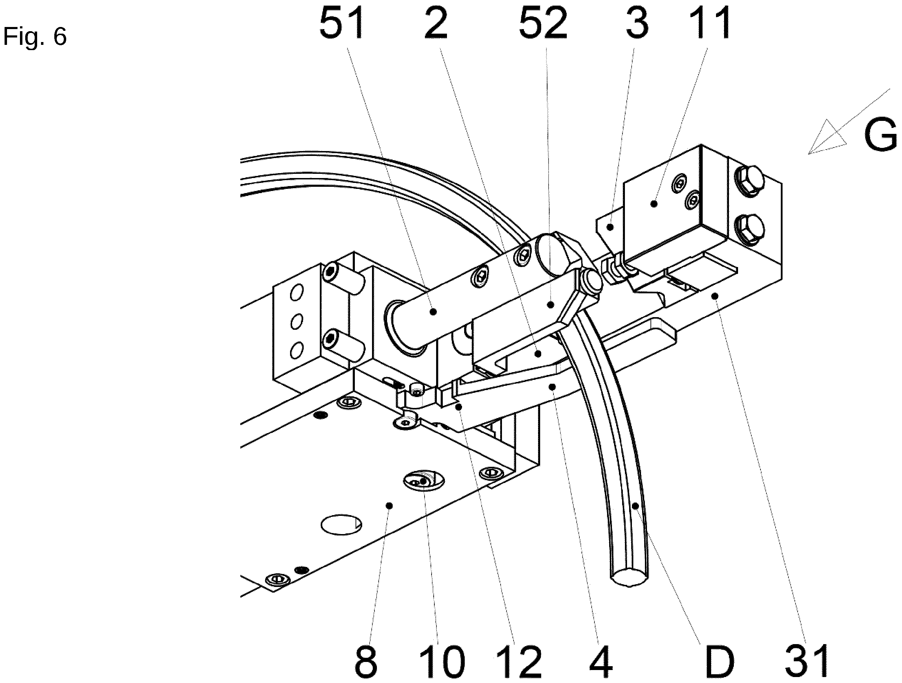

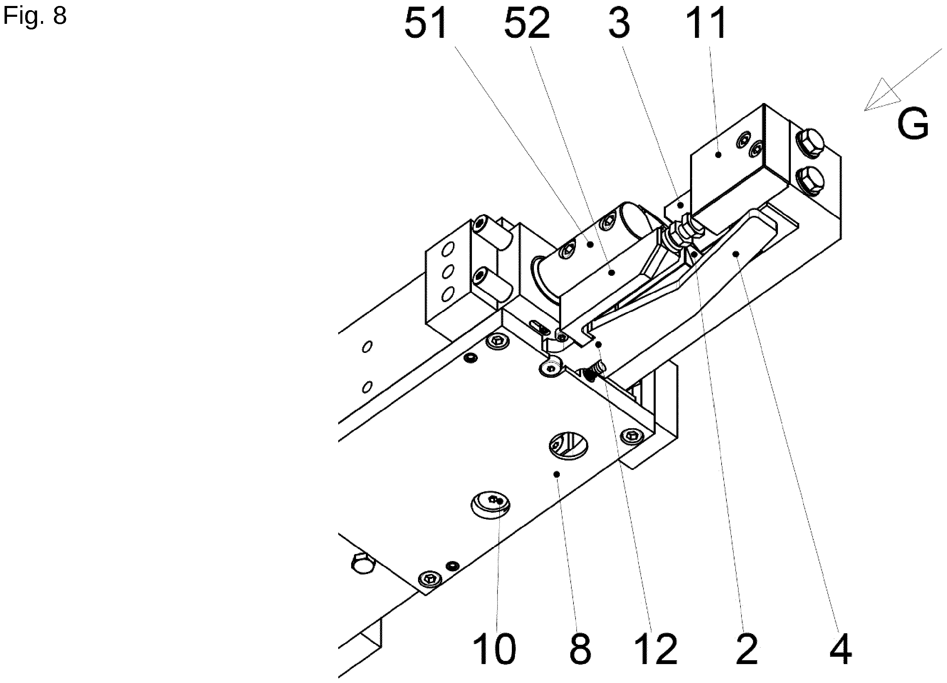

Der Greifer G gemäß den Figuren 2 bis 10, weist ein nicht dargestelltes Verbindungsmittel auf, mit der der Greifer G an einen Roboter oder eine Handhabungseinrichtung angeschlossen werden kann. Bei dem dargestellten Greifer G, aber nicht notwendigerweise bei jedem erfindungsgemäßen Greifer G, ist ein Gehäuse 1 vorgesehen, dass mittelbar oder unmittelbar an dem Verbindungsmittel befestigt ist. Das Gehäuse 1 ist nicht in allen Fig. 2 bis 9 dargestellt.

In dem Gehäuse 1 ist eine erste Spannbacke 2 des Greifers G angebracht, die relativ zum Gehäuse 1 unbeweglich ist. Dagegen ist eine zweite Spannbacke 3 beweglich zu dem Gehäuse 1. Ebenfalls beweglich zu dem Gehäuse sind ein Auslöser 4, ein Fangmittel 5 und ein Anschlagmittel 6 des Greifers. Fest verbunden mit dem Gehäuse 1 ist eine Haube 7. Nicht alle Komponenten des Greifers G sind in den Figuren 2 bis 10 dargestellt. In einigen Figuren sind einige Komponenten des Greifers G nicht dargestellt, um andere Komponenten klarer darstellen zu können.

Die zweite Spannbacke 3 des dargestellten Greifers G, aber nicht notwendigerweise jedes erfindungsgemäßen Greifers G, ist über einen Spannbackenarm 31 schwenkbar an einem Lagerteil 9 gelagert. Das Lagerteil 9 ist in einer Linearführung (nicht dargestellt) im Gehäuse 1 linear verschiebbar geführt.

Die Linearbewegung des Lagerteils 9 und in Folge dessen der zweiten Spannbacke 3 wird durch einen Antrieb bewirkt, der nicht vollständig dargestellt ist. Der Antrieb ist zumindest zum Teil in dem Gehäuse 1 untergebracht. Der Antrieb kann ein Elektroantrieb, ein Pneumatikantrieb oder ein Hydraulikantrieb sein.

Im dargestellten Beispiel wird das Lagerteil 9 durch eine Kolbenstange gebildet, die in einem Zylinder (nicht dargestellt) linear geführt ist. Kolbenstange 9 und Zylinder sind Teile eines Hydraulikantrieb zum Bewegen der zweiten Spannbacke.

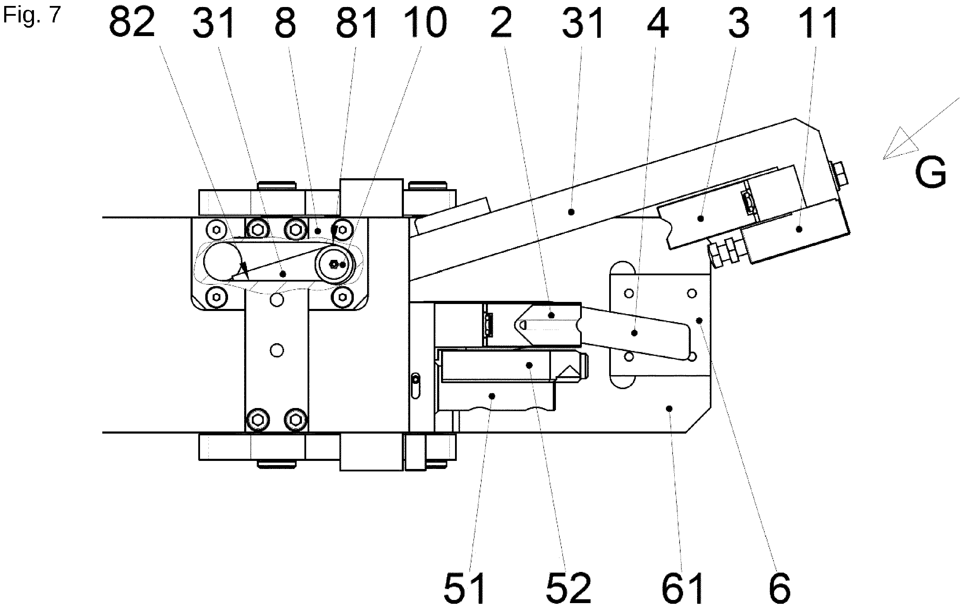

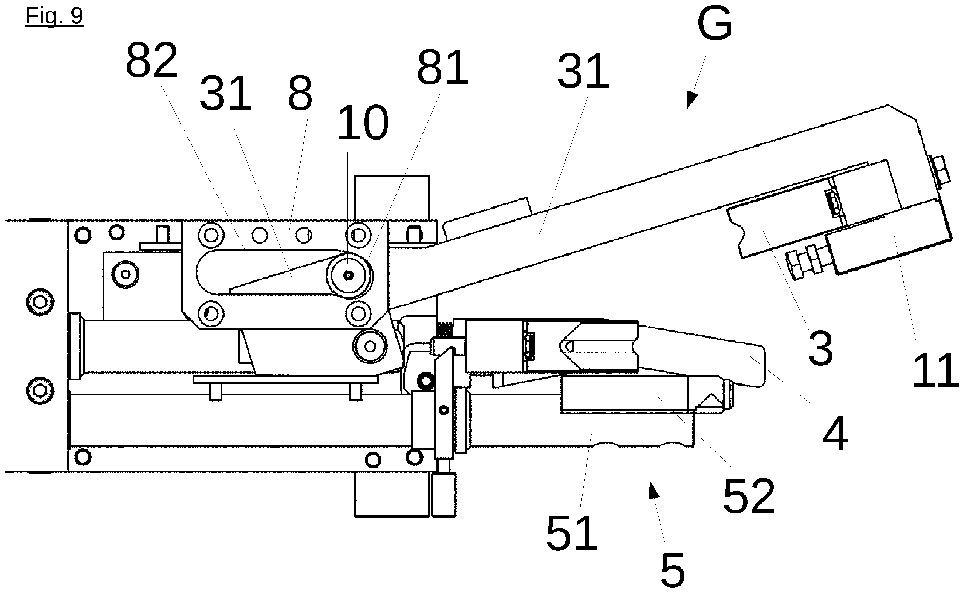

Im Gehäuse 1 ist ferner zumindest eine Kulisse 8 mit einem Schlitz (Fig. 9) oder einer Nut (übrige Figuren, insbesondere Fig. 7) befestigt. Der Schlitz bzw. die Nut hat einen gebogenen ersten Bereich 81, an den sich ein gerader Bereich 82 anschließt. In dem Schlitz bzw. der Nut ist ein Kulissenstein 10 geführt, der fest mit dem Spannbackenarm 31 der zweiten Spannbacke verbunden 3 ist. Der dargestellte Greifer weist zwei Kulissen 8 auf, eine auf der Oberseite, eine auf der Unterseite des Greifers G. In jeder Kulisse 8 ist ein Kulissenstein 10 vorgesehen.

Durch eine lineare Bewegung des Lagerteils 9 werden die Kulissensteine 10 in den Schlitzen bzw. Nuten der Kulissen 8 bewegt. Durch die Bewegung der Kulissensteine 10 wird in der Folge eine Bewegung der zweiten Spannbacke 3 gesteuert. Aufgrund des ersten, gebogenen Bereichs jedes Schlitzes bzw. der Nuten der Kulissen 8 bewegt sich die zweite Spannbacke 3 bei einer Bewegung der Kulissensteine 10 in dem ersten, gebogenen Bereich 81 des Schlitzes bzw. der Nut der Kulissen 8 entlang einer gebogenen Bahn, die dem ersten Bereich 81 der Kulisse 8 ähnlich ist. Aufgrund einer Bewegung der Kulissensteine 10 in dem zweiten, geraden Bereich 82 jedes Schlitzes bzw. jeder Nut der Kulisse 8 vollzieht die zweite Spannbacke eine gerade Bewegung.

Bei einer Bewegung der Kulissensteine 10 in den Schlitzen der Kulissen 8 aufgrund der Linearbewegung des Lagerteils 9 erreicht die zweite Spannbacke 3 u.a. eine erste, zweite und eine dritte Position, die näher erläutert werden.

Die erste Position nimmt die zweite Spannbacke 3 ein, wenn der Kulissenstein 10 am freien, vom zweiten Bereich 82 entfernten Ende des ersten Bereichs 81 ist. Die zweite Spannbacke 3 ist dann nach außen geschwenkt und aus einem Bereich benachbart zur ersten Spannbacke 2 gebracht.

Die zweite Position hat die zweite Spannbacke 3 erreicht, wenn die Kulissensteine 10 den Übergang vom ersten Bereich 81 des Schlitzes bzw. der Nut zum zweiten Bereich 82 des Schlitzes bzw. der Nut der Kulisse 8 erreicht haben. Die zweite Spannbacke 3 liegt dann der ersten Spannbacke 2 gegenüber, der der ersten Spannbacke 2 benachbarte Bereich liegt zwischen den beiden Spannbacken 2, 3.

Die dritte Position hat die zweite Spannbacke 3 erreicht, wenn die Kulissensteine 10 das freie, dem ersten Bereich 81 abgewandte Ende des zweiten Bereichs 82 jedes Schlitzes bzw. jeder Nut erreicht haben. Zwischen der zweiten und der dritten Position führt die zweite Spannbacke 3 eine lineare Bewegung aus. Die zweite Spannbacke 3 wird dabei gegen die erste Spannbacke 2 bewegt, wodurch zwischen den beiden Spannbacken 2, 3 ein Gegenstand, zum Beispiel ein Draht D eingeklemmt werden kann.

In der ersten Position der zweiten Spannbacke 3 ist diese in der Haube 7 untergebracht, die sich seitlich von der ersten Spannbacke 2 erstreckt. In der Haube 7 ist die zweite Spannbacke 3 in ihrer ersten Position vor Beschädigungen, zum Beispiel aufgrund einer Kollision mit einem Draht D oder anderem geschützt.

Das Fangmittel 5 ist ebenfalls linear beweglich geführt mittelbar oder unmittelbar an dem Gehäuse 1 befestigt. Das Fangmittel 5 umfasst einen Stab 51, an dem eine Platte 52 mit Schrauben befestigt ist. Der Stab 51 ist in dem Gehäuse 1 linear verschiebbar geführt. An der Platte 52 ist ein Vorsprung vorgesehen, dessen Zweck noch später erläutert wird. Das Fangmittel 5 ist seitlich neben der ersten Spannbacke 2 angeordnet. Es kann eine erste Position einnehmen, in der es nicht oder nur unwesentlich über die erste Spannbacke 2 hinaus- und in den der ersten Spannbacke 2 benachbarten Bereich hineinragt. In einer zweiten Position ragt das Fangmittel 5 über die erste Spannbacke 2 hinaus und begrenzt den der ersten Spannbacke 2 benachbarten Bereich seitlich.

Die Bewegung des Fangmittels 5 von der ersten Position in die zweite Position wird durch eine Feder (nicht dargestellt) bewirkt. Dabei kann es sich um eine Schraubendruckfeder handeln. Die Bewegung des Fangmittels 5 von der zweiten Position in die erste Position wird dagegen durch die Bewegung der zweiten Spannbacke 3 aus der zweiten in die dritte Position der zweiten Spannbacke 2 bewirkt, wozu ein Mitnehmer 11 an der zweiten Spannbacke 3 befestigt ist. Der Mitnehmer 11 kommt bei der Bewegung der zweiten Spannbacke 3 in die dritte Position zur Anlage an dem Fangmittel 5, wodurch dieses bei einer weiteren Bewegung der zweiten Spannbacke 3 bzw. des Mitnehmers 11 gegen den Druck der Schraubenfeder in die erste Position bewegt wird.

Bei dem Auslöser 4 handelt es sich um einen schwenkbar am Gehäuse 1 oder der ersten Spannbacke 2 befestigten Stab, der in einer ersten Position in den der ersten Spannbacke 2 benachbarten Bereich eingeschwenkt ist. In dieser ersten Stellung ist eine Falle 12, die an dem Auslöser 4 befestigt ist, an dem Vorsprung der Platte 52 des Fangmittels 5 eingehakt. Dadurch ist das Fangmittel 5 in seiner ersten Position gegen den Druck der Schraubenfeder fixiert. Die Falle 12 ist zwischen einem Schwenklager, über das der Auslöser 4 an dem Gehäuse 1 oder der ersten Spannbacke 2 gelagert ist, und einem freien Ende des Auslösers 4 vorgesehen, das in den der ersten Spannbacke 2 benachbarten Bereich hineinragt.

Um in seine zweite Position zu gelangen, wird der Auslöser 4 aus dem der ersten Spannbacke 2 benachbarten Bereich herausgeschwenkt und zwar in Richtung weg von dem Fangmittel 5. Dadurch kommt die Falle 12 von dem Vorsprung an der Platte 52 des Fangmittels 5 frei und das Fangmittel 5 schnellt aufgrund des Drucks der Schraubenfeder in seine zweite Position. Wird das Fangmittel 5 zurück in die erste Position bewegt, gleitet der Vorsprung entlang einer Schrägen der Falle 12 und schwenkt so den Auslöser 4 zurück in seine erste Position, in welcher der Auslöser 4 das Fangmittel 5 in seiner ersten Position hält.

Das Anschlagmittel 6 weist eine Platte 61 auf, die über zwei Paare von parallelen Stangen 62 (Parallellenker) an dem Gehäuse 1 beweglich befestigt ist. Die Platte 61 kann über die Stangen 62 im Raum bewegt werden, ohne dass sich die Ausrichtung der Platte 61 ändert. Die Platte 61 des Anschlagmittels 6 kann aus einer ersten Position in eine zweite Position gebracht werden, in der sie den Bereich benachbart zu der ersten Spannbacke 2 nach unten begrenzt.

In der ersten Position ist das Anschlagmittel 6 aus dem Bereich heraus gebracht.

Das Greifen eines Drahtes D mit dem erfindungsgemäßen Greifer G erfolgt in zwei Schritten.

In der Ausgangssituation sind das Fangmittel 5, der Auslöser 4, das Anschlagmittel 6 und die zweite Spannbacke 3 in ihren ersten Positionen. Der Greifer G wird nun an den zu ergreifenden Draht D herangeführt oder der zu ergreifenden Draht D wird an den Greifer G herangeführt und zwar so, dass der Draht D in den Greifer eingelegt wird und in den Bereich benachbart zu der ersten Spannbacke 2 kommt. Die Antriebe des Roboters R oder des Handhabungsgerätes sind dann vorzugsweise stillgesetzt. Der Maschinenbediener darf sich dann in einem Sicherheitsbereich um den Roboter R bzw. des Handhabungsgerätes aufhalten und den Draht manuell an den Greifer heranführen oder umgekehrt. Es ist ausreichend, wenn der Draht oder der Greifer nur geringe Wege zurücklegt.

Beim Einlegen des Drahtes in den Greifer stößt der Draht D gegen den Auslöser 4 und drückt den Auslöser 4 aus seiner ersten in seine zweite Position. Dadurch schnellt das nun freigegebene Fangmittel 5 aus seiner ersten Position in seine zweite Position nach vorne und begrenzt dann den Bereich benachbart zu der ersten Schwenkbacke 2, in dem sich ein Teil des Drahtes D befindet, seitlich, so dass sich der Draht D nicht mehr so leicht aus diesem Bereich herausbewegt. Der Draht D ist dann im Verhältnis zum Greifer G grob positioniert. Das Hervorschnellen des Fangmittels 5 erfolgt mit einer Schnelligkeit und Kraft die ausreichend sind, um den Draht D zügig einzufangen, die andererseits aber so gering sind, dass das Hervorschnellen des Fangmittels 5 keine Gefahr für den Bediener darstellen kann, wenn zum Beispiel ein Körperteil in den Weg des Fangmittels 5 kommt.

Dadurch der Auslöser 4 beim Einlegen des Drahtes D betätigt wird und das Fangmittel 5 den Draht D fängt und grob positioniert, ist unnötig das Fangmittel 5 durch die Betätigung eine Handschalters oder -tasters oder Fußschalters oder -tasters zu auslösen. Der Bedienter hat damit beide Hände frei, um den Draht D in den Greifer einzulegen bzw. hat einen sicheren Stand während des Einlegevorgangs.

Anschließend wird das Anschlagmittel 6 manuell oder maschinell aus seiner ersten in seine zweite Position geschwenkt. Die Lage des Greifers G zum Draht D wird dann so korrigiert, dass das Ende des Drahtes D an dem Anschlagmittel 6, nämlich der Platte des Anschlagmittels 6 anschlägt. Damit ist die Höhenlage des Greifers G zum Draht exakt eingestellt.

Anschließend verlässt der Bediener den Sicherheitsbereich um den Roboter R oder das Handhabungsgerät. Die Antriebe des Roboters werden wieder eingeschaltet gesetzt und ggf. auch betrieben.

Im Weiteren wird der Antrieb des Lagermittels 9 in Betrieb gesetzt, um die zweite Schwenkbacke 3 in ihre zweite Position zu überführen. Dabei schwenkt die zweite Schwenkbacke 3 in den Bereich benachbart zur ersten Schwenkbacke ein, so dass der Draht D zwischen den beiden Schwenkbacken 2, 3, dem Fangmittel 5 und dem Auslöser 4 zum Liegen kommt. Durch eine weitere Bewegung der zweiten Schwenkbacke 2 in Richtung ihrer dritten Position wird dann der Draht D zwischen den beiden Schwenkbacken 2, 3 geklemmt. Dadurch ist die Position des Drahtes D zum Greifer G exakt bestimmt. Das Anschlagmittel 6 wird zurück in seine erste Position geschwenkt, so dass das Ende des Drahtes D frei zugänglich ist. Durch eine Bewegung des Greifers G wird dann das Ende des Drahtes D in seine Schweißposition überführt.

## Patentansprüche

1. Greifer (G) zum Greifen von Enden (D1) von Drähten (D),
- mit wenigstens einem Verbindungsmittel, mit der der Greifer (G) an einem Arm (A) insbesondere eines Roboters (R) oder einer Handhabungseinrichtung befestigbar ist,
- mit einer ersten Spannbacke (2),
- mit einer zweiten Spannbacke (3) und
- mit einem ersten Antrieb,
- wobei zumindest die zweite Spannbacke (3) mit dem ersten Antrieb gekoppelt ist und mittels des Antriebs relativ zu der ersten Spannbacke (2) und dem Verbindungsmittel zwischen zumindest einer ersten Position und einer zweiten Position bewegbar ist und
- wobei in der ersten Position der zweiten Spannbacke (3) ein Draht (D) in einen Bereich benachbart zu der ersten Spannbacke (2) einbringbar ist und in der zweiten Position der zweiten Spannbacke (3) ein Draht (D) zwischen der ersten und der zweiten Spannbacke (2, 3) einspannbar ist,
**dadurch gekennzeichnet, dass**
der Greifer (G) ein Fangmittel (5) aufweist, welches aus einer ersten Position in eine zweite Position bewegbar ist, wobei das Fangmittel (5) in der zweiten Position den Bereich benachbart zu der ersten Spannbacke (2) zumindest einseitig begrenzt.

2. Greifer (G) nach Anspruch 1, **dadurch gekennzeichnet, dass** das Fangmittel (5) mittels einer Feder aus seiner ersten in seine zweite Position bewegbar ist.

3. Greifer (G) nach Anspruch 1 oder 2, **dadurch gekennzeichnet, dass** der Greifer (G) einen Auslöser (4) aufweist, der mit dem Fangmittel (5) und/oder der Feder gekoppelt ist, um die Bewegung des Fangmittels (5) aus seiner ersten Position in seine zweite Position auszulösen.

4. Greifer (G) nach Anspruch 3, **dadurch gekennzeichnet, dass** der Auslöser (4) in einem nicht ausgelösten Zustand in den Bereich benachbart zu der ersten Spannbacke (2) hineinragt und in einem ausgelösten Zustand außerhalb des Bereichs benachbart zu der ersten Spannbacke (2) ist.

5. Greifer (G) nach einem der Ansprüche 1 bis 4, **dadurch gekennzeichnet, dass** die zweite Spannbacke (3) aus der zweiten Position in eine dritte Position bewegbar ist.

6. Greifer (G) nach einem der Ansprüche 1 bis 5, **dadurch gekennzeichnet, dass** mittels der zweiten Spannbacke (3) und/oder einem mit der zweiten Spannbacke (2) verbundenem Gegenstand (11) das Fangmittel (5) aus der zweiten Position in die erste Position bewegbar ist.

7. Greifer (G) nach einem der Ansprüche 1 bis 6, **dadurch gekennzeichnet, dass** das Fangmittel (5) in der ersten Position durch eine Falle (12) oder einen Haken am Auslöser (4) gehalten ist.

8. Greifer (G) nach einem der Ansprüche 1 bis 7, **dadurch gekennzeichnet, dass** die zweite Spannbacke (3) schwenkbar an einem Lagerteil (9) gelagert ist.

9. Greifer (G) nach Anspruch 8, **dadurch gekennzeichnet, dass** das Lagerteil (9) linear verschiebbar am und/oder zum Verbindungsmittel gelagert ist.

10. Greifer (G) nach Anspruch 9, **dadurch gekennzeichnet, dass** der Greifer (G) eine mit dem Verbindungmittel fest verbundene Kulisse (8) und einen mit dem der zweiten Spannbacke (3) verbundenen Kulissenstein (10) aufweist, wobei der Kulissenstein (10) in der Kulisse (8) angeordnet ist.

11. Greifer (G) nach Anspruch 10, **dadurch gekennzeichnet, dass** die Kulisse (8) einen Schlitz mit einem ersten gebogenen Bereich (81) und einem zweiten, an den ersten Bereich (81) anschließenden, geraden Bereich (82) hat.

12. Greifer (G) nach Anspruch 11, **dadurch gekennzeichnet, dass** die zweite Spannbacke (3) in der ersten Position ist, wenn der Kulissenstein (10) in einer ersten Position am vom zweiten Bereich (82) abgewandten Ende des ersten Bereichs (81) des Schlitzes der Kulisse (8) ist.

13. Greifer (G) nach Anspruch 11 oder 12, **dadurch gekennzeichnet, dass** die zweite Spannbacke (3) in der zweiten Position ist, wenn sich der Kulissenstein (10) in einer zweiten Position an einem Ort des Schlitzes der Kulisse (8) am Übergang vom ersten (81) zum zweiten Bereich (82) oder benachbart zu diesem Ort befindet.

14. Greifer (G) nach einem der Ansprüche 11 bis 13, **dadurch gekennzeichnet, dass** die zweite Spannbacke (3) in der dritten Position ist, wenn der Kulissenstein (10) in einer dritten Position am vom ersten Bereich (81) abgewandten Ende des zweiten Bereichs (82) des Schlitzes der Kulisse (8) ist.

15. Greifer (G) nach einem der Ansprüche 1 bis 14, **dadurch gekennzeichnet, dass** der Greifer (G) ein Anschlagmittel (6) aufweist, das zwischen einer ersten Position und einer zweiten Position beweglich ist, wobei das Anschlagmittel (6) in der ersten Position einen Anschlag für das Ende (D1) eines vom Greifer (G) aufgenommenen Drahtes (D) ist, während in der zweiten Position des Anschlagmittel (6) das Ende (D1) des Drahtes (D) frei vom Anschlagmittel (6) ist.

16. Greifer (G) nach einem der Ansprüche 1 bis 15, **dadurch gekennzeichnet, dass** der Greifer (G) eine Haube (7) aufweist, in welcher die zweite Spannbacke (3) in der ersten Position untergebracht ist.

17. Roboter (R) oder Handhabungsgerät für Draht, insbesondere zum Zuführen von Enden (D1) zu verschweißender Drähte (D) in eine Drahtschweißmaschine, mit einem Arm und einem an dem Arm befestigten Greifer, **dadurch gekennzeichnet, dass** der Greifer ein Greifer nach einem der Ansprüche 1 bis 16 ist.

18. Drahtschweißmaschine (S) mit wenigstens einem Roboter (R) oder Handhabungsgerät zum Zuführen von Enden (D1) zu verschweißender Drähte (D), wobei der Roboter (R) oder das Handhabungsgerät wenigstens einen Greifer (G) zum Greifen von Enden (D1) des Drahtes (D) nach einem der Ansprüche 1 bis 16 aufweist.

19. Verfahren zum Greifen eines Drahtes und Positionieren des Endes des Drahtes mit einem Greifer, insbesondere nach einem der Ansprüche 1 bis 16, **gekennzeichnet durch**
- das Heranführen des Drahtes an den Greifer oder das Heranführen des Greifers an den Draht,
- das Einlegen des Drahtes in den Greifer in einen Bereich benachbart einer ersten Spannbacke des Greifers, wobei bei Einlegen ein Auslöser eine Bewegung eines Fangmittels aus einer ersten in eine zweite Position auslöst,
- das Begrenzen des Bereichs benachbart einer ersten Spannbacke des Greifers, in dem der eingelegte Draht bewegt werden kann durch das in der zweiten Position befindliche Fangmittel des Greifers,
- das Positionieren des Drahtes in dem Greifers mittels wenigstens eines Anschlagmittels,
- das Bewegen einer zweiten Spannbacke relativ zur ersten Spannbacke zum Einspannen des Drahtes und
- das Positionieren des Greifers mit dem eingespannten Draht in einer vorbestimmten Position.

## Claims

1. Gripper (G) for gripping ends (D1) of wires (D), comprising
- at least one connecting means, by which the gripper (G) can be secured to an arm (A) in particular of a robot (R) or a manipulating device,
- a first clamping jaw (2),
- a second clamping jaw (3) and
- a first drive,
- wherein at least the second clamping jaw (3) is coupled to the first drive and can be moved by means of the drive relative to the first clamping jaw (2) and the connecting means between at least a first position and a second position and
- wherein in the first position of the second clamping jaw (3) a wire (D) can be introduced into an area adjacent to the first clamping jaw (2) and in the second position of the second clamping jaw (3) a wire (D) can be clamped between the first and the second clamping jaw (2, 3),
**characterised in that**
the gripper (G) comprises a catching means (5) which can be moved from a first position to a second position, wherein the catching means (5) in the second position delimits at least on one side the area adjacent to the first clamping jaw (2).

2. Gripper (G) according to claim 1, **characterised in that** the catching means (5) can be moved by means of a spring from its first to its second position.

3. Gripper (G) according to claim 1 or 2, **characterised in that** the gripper (G) comprises a trigger (4), which is coupled to the catching means (5) and/or the spring, in order to trigger the movement of the catching means (5) from its first position to its second position.

4. Gripper (G) according to claim 3, **characterised in that** the trigger (4) in a non-triggered state projects into the area adjacent to the first clamping jaw (2) and in a triggered state is outside the area adjacent to the first clamping jaw (2).

5. Gripper (G) according to any of claims 1 to 4, **characterised in that** the second clamping jaw (3) can be moved from the second position to a third position.

6. Gripper (G) according to any of claims 1 to 5, **characterised in that** by means of the second clamping jaw (3) and/or an object (11) connected to the second clamping jaw (2) the catching means (5) can be moved from the second position to the first position.

7. Gripper (G) according to any of claims 1 to 6, **characterised in that** the catching means (5) is held in the first position by a latch (12) or a hook on the trigger (4).

8. Gripper (G) according to any of claims 1 to 7, **characterised in that** the second clamping jaw (3) is mounted pivotably on a bearing part (9).

9. Gripper (G) according to claim 8, **characterised in that** the bearing part (9) is mounted linearly displaceably on and/or relative to the connecting means.

10. Gripper (G) according to claim 9, **characterised in that** the gripper (G) comprises a slide (8) connected securely to the connecting means and a sliding block (10) connected to the second clamping jaw (3), wherein the sliding block (10) is arranged in the slide (8).

11. Gripper (G) according to claim 10, **characterised in that** the slide (8) has a slot with a first curved area (81) and a second straight area (82) adjoining the first area (81).

12. Gripper (G) according to claim 11, **characterised in that** the second clamping jaw (3) is in the first position when the sliding block (10) is in a first position at the end of the first area (81) of the slot of the slide (8) facing away from the second area (82).

13. Gripper (G) according to claim 11 or 12, **characterised in that** the second clamping jaw (3) is in the second position when the sliding block (10) is in a second position in a location of the slot of the slide (8) at the transition from the first (81) to the second area (82) or adjacent to said location.

14. Gripper (G) according to any of claims 11 to 13, **characterised in that** the second clamping jaw (3) is in the third position when the sliding block (10) is in a third position at the end of the second area (82) of the slot of the slide (8) facing away from the first area (81).

15. Gripper (G) according to any of claims 1 to 14, **characterised in that** the gripper (G) comprises a stop means (6) which can be moved between a first position and a second position, wherein the stop means (6) in the first position is a stop for the end (D1) of a wire (D) taken up by the gripper (G), whereas in the second position of the stop means (6) the end (D1) of the wire (D) is free of the stop means (6).

16. Gripper (G) according to any of claims 1 to 15, **characterised in that** the gripper (G) comprises a cover (7) in which the second clamping jaw (3) is accommodated in the first position.

17. Robot (R) or manipulating device for wire, in particular for feeding wires (D) to be welded at ends (D1) into a wire welding machine, comprising an arm and a gripper fixed onto the arm, **characterised in that** the gripper is a gripper according to any of claims 1 to 16.

18. Wire welding machine (S) comprising at least one robot (R) or manipulating device for feeding wires (D) to be welded at ends (D1), wherein the robot (R) or the manipulating device comprises at least one gripper (G) for gripping ends (D1) of the wire (D) according to any of claims 1 to 16.

19. Method for gripping a wire and positioning the end of the wire with a gripper, in particular according to any of claims 1 to 16, **characterised by**
- moving the wire up to the gripper or moving the gripper up to the wire,
- placing the wire into the gripper in an area adjacent to a first clamping jaw of the gripper, wherein during the insertion a trigger triggers a movement of a catching means from a first to a second position,
- delimiting the area adjacent to a first clamping jaw of the gripper, in which the inserted wire can be moved by the catching means of the gripper in the second position,
- positioning the wire in the gripper by means of at least one stop means,
- moving a second clamping jaw relative to the first clamping jaw for clamping the wire and
- positioning the gripper with the clamped wire in a predefined position.

## Revendications

1. Grappin (G) servant à saisir des extrémités (D1) de fils (D),
- avec au moins un moyen de liaison, avec lequel le grappin (G) peut être fixé au niveau d'un bras (A) en particulier d'un robot (R) ou d'un dispositif de manipulation,
- avec au moins une première mâchoire de serrage (2),
- avec une deuxième mâchoire de serrage (3) et
- avec un premier entraînement,
- dans lequel au moins la deuxième mâchoire de serrage (3) est couplée au premier entraînement et peut être déplacée au moyen de l'entraînement par rapport à la première mâchoire de serrage (2) et de liaison entre au moins une première position et une deuxième position, et
- dans lequel un fil (D) peut être introduit dans une zone de manière adjacente par rapport à la première mâchoire de serrage (2) dans la première position de la deuxième mâchoire de serrage (3) et un fil (D) peut être enserré entre la première et la deuxième mâchoire de serrage (2, 3) dans la deuxième position de la deuxième mâchoire de serrage (3),
**caractérisé en ce que**
le grappin (G) présente un moyen de prise (5), qui peut être déplacé depuis une première position dans une deuxième position, dans lequel le moyen de prise (5) délimite au moins d'un côté, dans la deuxième position, la zone de manière adjacente à la première mâchoire de serrage (2).

2. Grappin (G) selon la revendication 1, **caractérisé en ce que** le moyen de prise (5) peut être déplacé au moyen d'un ressort depuis sa première dans sa deuxième position.

3. Grappin (G) selon la revendication 1 ou 2, **caractérisé en ce que** le grappin (G) présente un déclencheur (4), qui est couplé au moyen de prise (5) et/ou au ressort pour déclencher le déplacement du moyen de prise (5) depuis sa première position dans sa deuxième position.

4. Grappin (G) selon la revendication 3, **caractérisé en ce que** le déclencheur (4) dépasse, dans un état non déclenché, dans la zone de manière adjacente à la première mâchoire de serrage (2) et est, dans un état déclenché, à l'extérieur de la zone, adjacent à la première mâchoire de serrage (2).

5. Grappin (G) selon l'une quelconque des revendications 1 à 4, **caractérisé en ce que** la deuxième mâchoire de serrage (3) peut être déplacée depuis la deuxième position dans une troisième position.

6. Grappin (G) selon l'une quelconque des revendications 1 à 5, **caractérisé en ce que** le moyen de prise (5) peut être déplacé depuis la deuxième position dans la première position au moyen de la deuxième mâchoire de serrage (3) et/ou d'un objet (11) relié à la deuxième mâchoire de serrage (2).

7. Grappin (G) selon l'une quelconque des revendications 1 à 6, **caractérisé en ce que** le moyen de prise (5) est maintenu dans la première position par un pêne (12) ou un crochet au niveau du déclencheur (4).

8. Grappin (G) selon l'une quelconque des revendications 1 à 7, **caractérisé en ce que** la deuxième mâchoire de serrage (3) est montée de manière à pouvoir pivoter au niveau d'une partie de palier (9).

9. Grappin (G) selon la revendication 8, **caractérisé en ce que** la partie de palier (9) est montée de manière à pouvoir être coulissée de manière linéaire au niveau du moyen de liaison et/ou par rapport à celui-ci.

10. Grappin (G) selon la revendication 9, **caractérisé en ce que** le grappin (G) présente une coulisse (8) reliée de manière solidaire au moyen de liaison et un coulisseau (10) relié à la deuxième mâchoire de serrage (3), dans lequel le coulisseau (10) est disposé dans la coulisse (8).

11. Grappin (G) selon la revendication 10, **caractérisé en ce que** la coulisse (8) a une entaille avec une première zone (81) arquée et une deuxième zone (82) droite située dans le prolongement de la première zone (81).

12. Grappin (G) selon la revendication 11, **caractérisé en ce que** la deuxième mâchoire de serrage (3) est dans la première position quand le coulisseau (10) est dans une première position au niveau de l'extrémité, opposée à la deuxième zone (82), de la première zone (81) de l'entaille de la coulisse (8).

13. Grappin (G) selon la revendication 11 ou 12, **caractérisé en ce que** la deuxième mâchoire de serrage (3) est dans la deuxième position quand le coulisseau (10) se trouve dans une deuxième position au niveau d'un emplacement de l'entaille de la coulisse (8) au niveau de la transition de la première (81) vers la deuxième zone (82) ou de manière adjacente par rapport audit emplacement.

14. Grappin (G) selon l'une quelconque des revendications 11 à 13, **caractérisé en ce que** la deuxième mâchoire de serrage (3) est dans la troisième position quand le coulisseau (10) est dans une troisième position au niveau de l'extrémité, opposée à la première zone (81), de la deuxième zone (82) de l'entaille de la coulisse (8).

15. Grappin (G) selon l'une quelconque des revendications 1 à 14, **caractérisé en ce que** le grappin (G) présente un moyen de butée (6), qui est mobile entre une première position et une deuxième position, dans lequel le moyen de butée (6) est dans la première position une butée pour l'extrémité (D1) d'un fil (D) logé par le grappin (G), tandis que dans la deuxième position du moyen de butée (6), l'extrémité (D1) du fil (D) est sans le moyen de butée (6).

16. Grappin (G) selon l'une quelconque des revendications 1 à 15, **caractérisé en ce que** le grappin (G) présente un capot (7), dans lequel la deuxième mâchoire de serrage (3) est abritée dans la première position.

17. Robot (R) ou appareil de manipulation pour fil, en particulier servant à amener des extrémités (D1) aux fils (D) de soudage dans une soudeuse au fil, avec un bras et un grappin fixé au niveau du bras, **caractérisé en ce que** le grappin est un grappin selon l'une quelconque des revendications 1 à 16.

18. Soudeuse au fil (S) avec au moins un robot (R) ou un appareil de manipulation servant à amener des extrémités (D1) aux fils (D) de soudage, dans laquelle le robot (R) ou l'appareil de manipulation présente au moins un grappin (G) servant à saisir des extrémités (D1) du fil (D) selon l'une quelconque des revendications 1 à 16.

19. Procédé servant à saisir un fil et à positionner l'extrémité du fil avec un grappin, en particulier selon l'une quelconque des revendications 1 à 16, **caractérisé par**
- le rapprochement du fil au grappin ou le rapprochement du grappin au fil,
- le placement du fil dans le grappin dans une zone de manière adjacente à une première mâchoire de serrage du grappin, dans lequel lors du placement, un déclencheur déclenche un déplacement d'un moyen de prise depuis une première dans une deuxième position,
- la limitation de la zone de manière adjacente à une première mâchoire de serrage du grappin, dans laquelle le fil placé peut être déplacé par le moyen de prise, se trouvant dans la deuxième position, du grappin,
- le positionnement du fil dans le grappin au moyen d'au moins un moyen de butée,
- le déplacement d'une deuxième mâchoire de serrage par rapport à la première mâchoire de serrage pour enserrer le fil, et
- le positionnement du grappin avec le fil dans une position prédéfinie.
